# DEMANDE DE BREVET EUROPEEN

(11) **EP 4 571 899 A1**
(43) Date de publication de la demande: **18.06.2025**
(21) Numéro de dépôt: 23307197.6
(22) Date de dépôt: 13.12.2023
(51) Int. Cl.: H01M 6/00, H01M 10/04

(54) **DOIGT D'APPLICATION D'ADHESIF COMPRENANT UN MATERIAU AMORTISSEUR, POUR APPLIQUER UN ADHESIF SUR UNE CELLULE DE BATTERIE**

(71) Demandeur: Automotive Cells Company SE, 33520 Bruges (FR)
(72) Inventeur: MICOSSI, Bruno, 33520 BRUGES (FR)
(74) Mandataire: Alatis

(57) **Abrégé**

L'invention concerne un doigt (2) d'application d'adhésif. Le doigt (2) est configuré pour appliquer un adhésif sur une ébauche de cellule de batterie. Le doigt (2) comprend un corps (20) dans un premier matériau et un matériau amortisseur (22) qui est différent du premier matériau. Le matériau amortisseur (22) est configuré pour amortir un contact entre le doigt (2) d'application d'adhésif et l'ébauche de cellule de batterie. Le matériau amortisseur (22) est configuré pour amortir une pression qui est exercée par le doigt (2) d'application d'adhésif sur l'ébauche de cellule lorsque l'adhésif est pressé sur l'ébauche de de batterie pour faire adhérer l'adhésif à l'ébauche de cellule de batterie.

## Description

### DOMAINE TECHNIQUE DE L'INVENTION

L'invention se rapporte à la fabrication de modules de batteries, connu sous le terme anglais de « battery pack ». Plus précisément, l'invention concerne la fabrication d'une cellule pour un module de batterie.

Lors de la fabrication d'une cellule de batterie, de l'adhésif est appliqué sur un empilement d'une ébauche de cellule pour conserver la position relative entre elles des différentes couches de l'empilement. L'invention porte en particulier sur la mise en place d'un adhésif sur une ébauche de cellule de batterie par une machine d'application d'adhésif.

### ÉTAT DE LA TECHNIQUE ANTÉRIEURE

Une machine d'application d'adhésif de structure connue comprend un support, un rouleau de guidage de l'adhésif et un doigt d'application d'adhésif. La machine d'application d'adhésif est configurée pour appliquer l'adhésif sur une ébauche de cellule de batterie.

La machine d'application d'adhésif tend à utiliser une trop grande quantité de ruban adhésif, ce qui peut conduire à ce que le ruban adhésif se replie sur lui-même et adhère sur lui-même. La machine d'application d'adhésif est alors susceptible de se bloquer.

L'adhésif appliqué par la machine d'application d'adhésif tend à se détacher de l'ébauche de cellule, lorsqu'une pression faible est exercée par le doigt sur l'adhésif et sur l'ébauche de cellule lors de la mise en place de l'adhésif.

Néanmoins, l'ébauche de cellule est fragile, et le doigt d'application d'adhésif est rigide, en étant typiquement en matériau métallique. Le doigt d'application d'adhésif risque d'endommager l'ébauche de cellule, par exemple en déformant plastiquement l'ébauche de cellule, lorsque le doigt d'application d'adhésif appuie sur l'ébauche de cellule.

Par ailleurs, un contact direct du doigt d'application de l'adhésif et de l'ébauche de cellule de batterie est susceptible d'endommager l'ébauche de cellule, par exemple au moins une électrode d'un empilement de l'ébauche de cellule qui dépasserait du reste de l'empilement.

Il existe un besoin pour améliorer la mise en place d'un adhésif sur une ébauche de cellule de batterie, tout en limitant les détériorations de l'ébauche de cellule de batterie lors de la mise en place de l'adhésif.

### EXPOSÉ DE L'INVENTION

L'invention vise à remédier à tout ou partie des inconvénients de l'état de la technique mentionnés ci-dessus.

A cet égard, l'invention a pour objet un doigt d'application d'adhésif configuré pour appliquer un adhésif sur une ébauche de cellule de batterie. Le doigt d'application d'adhésif comprend un corps de doigt dans un premier matériau.

Selon l'invention, le doigt d'application d'adhésif comprend un matériau amortisseur qui est différent du premier matériau. Le matériau amortisseur est configuré pour amortir un contact entre le doigt d'application d'adhésif et l'ébauche de cellule de batterie. Le matériau amortisseur est configuré pour amortir une pression qui est exercée par le doigt d'application d'adhésif sur l'ébauche de cellule lorsque l'adhésif est pressé sur l'ébauche de cellule de batterie pour faire adhérer l'adhésif à l'ébauche de cellule de batterie.

Grâce à l'invention telle que revendiquée, la mise en place d'un adhésif sur une ébauche de cellule de batterie est améliorée, tout en limitant les détériorations de l'ébauche de cellule de batterie lors de la mise en place de l'adhésif. Le doigt facilite ainsi la fabrication d'une cellule de batterie. La mise en place de l'adhésif est notamment améliorée en réduisant les chutes d'adhésif. En déposant une quantité précise d'adhésif à l'endroit souhaité, les arrêts intempestifs d'une machine d'application d'adhésif sont limités. La mise en place de l'adhésif est aussi améliorée en limitant les détériorations de l'ébauche de cellule lors de la mise en place de l'adhésif. Le matériau amortisseur permet notamment de limiter les déformations plastiques de l'ébauche de cellule lors de l'application d'un effort de pression par le doigt d'application d'adhésif sur l'ébauche de cellule. Le matériau amortisseur permet par exemple d'éviter d'abîmer des électrodes qui dépasseraient de l'ébauche de cellule lors d'un contact du doigt avec l'ébauche de cellule.

De préférence, l'adhésif est un ruban adhésif.

Selon une particularité de réalisation, le corps du doigt est en matériau métallique. Le doigt d'application d'adhésif comprend une surface de déroulement d'adhésif délimitant au moins partiellement l'extérieur du doigt d'application d'adhésif. Le matériau amortisseur est au moins partiellement situé entre le corps du doigt et la surface de déroulement d'adhésif.

Selon une particularité de réalisation, le matériau amortisseur est situé sur sensiblement tout un contour extérieur d'une première extrémité longitudinale du corps du doigt d'application d'adhésif. De préférence, le contour extérieur comprend une surface inférieure, une surface supérieure et une surface avant du corps du doigt d'application d'adhésif.

Selon une particularité de réalisation, le doigt d'application d'adhésif comprend des orifices d'aspiration configurés pour aspirer l'adhésif contre le doigt d'application d'adhésif. De préférence, les orifices d'aspiration sont situés sur une surface supérieure du corps de doigt et sur une surface avant du corps de doigt.

Selon une particularité de réalisation, le doigt d'application d'adhésif comprend un élément antiadhésif qui est situé entre le matériau amortisseur et l'adhésif lorsque le doigt d'application d'adhésif est au moins partiellement recouvert d'adhésif. L'élément antiadhésif est configuré pour limiter une adhérence de l'adhésif sur le matériau amortisseur.

Selon une particularité de réalisation, l'élément antiadhésif comprend un revêtement antiadhésif comprend un tétra-fluoroéthylène. De préférence, le revêtement adhésif comprend un polytétrafluoroéthylène, également connu sous le nom commercial de « Téflon ».

Selon une particularité de réalisation, le doigt d'application d'adhésif comprend au moins un rail de guidage de l'adhésif. De préférence, le rail de guidage est situé axialement en arrière du matériau amortisseur.

Selon une particularité de réalisation, le doigt d'application d'adhésif comprend une fente de passage d'une lame de découpe de l'adhésif.

Selon une particularité de réalisation, le doigt d'application d'adhésif comprend un organe de maintien du matériau amortisseur qui est configuré pour maintenir en position le matériau amortisseur contre le corps du doigt. De préférence, l'organe de maintien du matériau amortisseur est configuré pour pincer le matériau amortisseur contre le corps du doigt.

Selon une particularité de réalisation, l'organe de maintien du matériau amortisseur comprend un ruban métallique qui est traversé par la fente de passage de la lame de découpe de l'adhésif. Le ruban métallique est configuré pour guider la lame de découpe à la sortie de la fente de passage de la lame de découpe de l'adhésif.

L'invention porte également sur une machine d'application d'adhésif sur une ébauche de cellule de batterie. La machine d'application d'adhésif comprend un doigt d'application d'adhésif tel que défini ci-dessus, un support du doigt d'application d'adhésif, et un support de l'ébauche de cellule de batterie.

Selon une particularité de réalisation, la machine d'application d'adhésif comprend un organe d'aspiration de l'adhésif, un outil de découpe de l'adhésif comprend une lame de découpe de l'adhésif, et/ou un rouleau de guidage de l'adhésif.

Selon une particularité de réalisation, le support du doigt est également le support de l'outil de découpe.

L'invention porte enfin sur un procédé de mise en place d'un adhésif par une machine d'application d'adhésif tel que défini ci-dessus. Le procédé comprend une étape de mise en place de l'adhésif par le doigt d'application d'adhésif sur l'ébauche de cellule de batterie. Le procédé comprend une étape de découpe de l'adhésif par la lame de l'outil de découpe, la lame est déplacée à travers la fente du doigt d'application de l'adhésif. Le procédé comprend une étape de déplacement de l'ébauche de cellule de batterie relativement au doigt d'application.

Selon une particularité de réalisation, l'étape de mise en place de l'adhésif comprend le déplacement du doigt d'application d'adhésif relativement à l'ébauche de cellule de batterie. Selon une autre particularité de réalisation, l'étape de mise en place de l'adhésif comprend le déroulement de l'adhésif le long de la surface de déroulement, une extrémité de l'adhésif étant attachée à l'ébauche de cellule de batterie.

### BRÈVE DESCRIPTION DES FIGURES

D'autres caractéristiques et avantages de l'invention sont mis en évidence par la description ci-après d'exemples non limitatifs de réalisation des différents aspects de l'invention.

La description se réfère aux figures annexées qui sont aussi données à titre d'exemples de réalisation non limitatifs de l'invention :
- la figure 1 est une représentation schématique en perspective d'une machine d'application d'adhésif sur une ébauche de cellule de batteries, selon un premier mode de réalisation de l'invention;
- la figure 2 est une représentation en perspective du doigt d'application d'adhésif de la machine d'application d'adhésif selon le premier mode de réalisation ;
- la figure 3 est une vue en perspective éclatée d'un doigt d'application d'adhésif selon un deuxième mode de réalisation ;
- la figure 4 est une vue de dessus d'une ébauche de cellule de batterie après mise en place de l'adhésif ;
- la figure 5 illustre la mise en oeuvre d'un procédé de mise en place d'un adhésif au moyen de la machine d'application d'adhésif selon le premier ou le deuxième mode de réalisation.

Pour plus de clarté, les éléments identiques ou similaires sont repérés par des signes de référence identiques sur l'ensemble des figures.

### DESCRIPTION DÉTAILLÉE DE MODE DE RÉALISATION

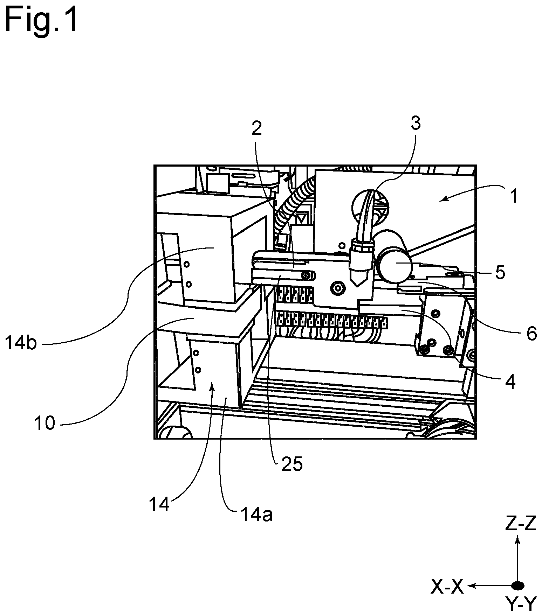

La figure 1 représente une machine **1** d'application d'adhésif sur une ébauche de cellule **10** de batterie. La machine **1** d'application d'adhésif comprend un doigt **2** d'application d'adhésif, un support **4** du doigt d'application d'adhésif, un support **14** de l'ébauche de cellule de batterie, un organe d'aspiration **3** de l'adhésif, un outil de découpe **6** de l'adhésif, et un rouleau de guidage **5** de l'adhésif. La machine **1** d'application d'adhésif est configurée pour mettre en place de l'adhésif **9** sur une ébauche de cellule **10** de batterie.

La machine **1** d'application d'adhésif s'étend axialement le long d'une direction longitudinale **X-X** de la machine d'application d'adhésif. La direction longitudinale **X-X** est également la direction longitudinale du doigt **2** d'application d'adhésif. Une direction axiale ou direction longitudinale est une direction parallèle à la direction longitudinale **X-X** de la machine d'application d'adhésif. Les termes avant et arrière sont définis relativement à la direction axiale, l'extrémité longitudinale avant **2a** du doigt **2** étant celle qui la plus proche de l'ébauche de cellule **10.** La machine **1** d'application d'adhésif s'étend transversalement le long d'une direction transversale **Y-Y** qui est perpendiculaire à la direction axiale et qui correspond à une direction de l'épaisseur du doigt **2.** Une transversale est une direction parallèle à la direction transversale **Y-Y** de la machine d'application d'adhésif. Une direction de la hauteur **Z-Z** de la machine **1** d'application d'adhésif est une direction qui est localement perpendiculaire à la direction axiale et à la direction transversale. Les termes inférieurs et supérieurs sont définis en référence à la direction de la hauteur **Z-Z** par rapport à une orientation d'utilisation relativement au sol de la machine **1** d'application d'adhésif telle que celle qui est représentée à la figure 1.

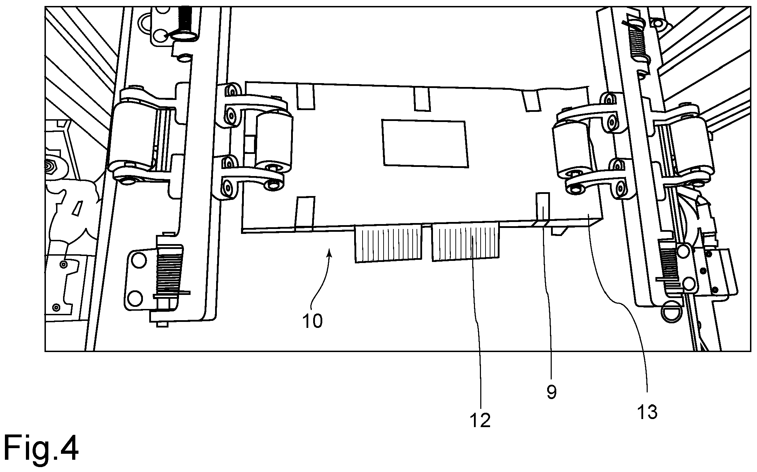

La figure 4 représente l'ébauche de cellule **10** de batterie après la mise en place de l'adhésif **9.** L'ébauche de cellule **10** de batterie sert à la fabrication d'une cellule de batterie, par exemple pour un véhicule motorisé tel qu'une automobile. La cellule de batterie est par exemple de type prismatique. L'ébauche de cellule **10** de batterie comprend un empilement de couches. L'empilement est formé de la superposition d'électrodes négatives, de séparateurs et d'électrodes positives. L'ébauche de cellule **10** comporte des languette **12** de contact électrique qui relient entre elles les électrodes négatives et qui relient entre elles les électrodes positives. L'empilement de couches de l'ébauche de cellule **10** est enveloppé par un emballage **13.** L'emballage **13** est par exemple formé d'une matière identique ou similaire à celle des séparateurs, notamment de poudre de céramique. De l'adhésif **9** est mis en place sur l'emballage **13** pour maintenir en place l'emballage **13** autour de l'empilement et pour maintenir en position entre elles les différentes couches de l'empilement. Il est d'autant plus difficile de mettre en place l'adhésif **9** sur l'ébauche de cellule **10** du fait du caractère au moins partiellement pulvérulent de la surface de l'emballage **13.** A la fin de la fabrication de la cellule de batterie, un boitier (non représenté) est mis en place autour de l'emballage **13** ou de l'empilement.

L'adhésif **9** est un ruban adhésif, dans chacun des modes de réalisation représenté. L'adhésif **9** est adapté à un usage automobile. Il est configuré pour être neutre électriquement.

En référence à la figure 1, le support **4** est un support du doigt d'application **2** d'adhésif et un support de l'outil de découpe **6** de l'adhésif. En particulier, le doigt **2** d'application d'adhésif est par exemple fixe relativement au support **4.** Le support **4** sert à déplacer le doigt **2** et l'outil de découpe **6** relativement à l'ébauche de cellule **10,** lors de la mise en place de l'adhésif **9.**

L'outil de découpe **6** comprend une lame **60** de coupe de l'adhésif. La lame **60** est mobile axialement à travers le doigt **2** pour couper l'adhésif **9.** A l'exception de la lame **60,** l'outil de découpe **6** est fixe relativement au support **4** et au doigt **2** d'application d'adhésif. L'outil de découpe **6** est configuré pour couper l'adhésif **9** après le dépôt de l'adhésif **9** sur l'ébauche de cellule **10.**

Le support **14** de l'ébauche de cellule comprend deux éléments de support **14a, 14b** qui sont disposés symétriquement relativement à l'ébauche de cellule **10.** Chaque élément de support **14** comprend une plaque de fond et des jambes de maintien de l'ébauche de cellule **10.** Les jambes de maintien s'étendent chacune depuis la plaque de fond. Le support **14** sert à maintenir en position l'ébauche de cellule **10** relativement à la machine **1** d'application d'adhésif.

L'organe d'aspiration **3** comprend par exemple une pompe et des tuyaux d'aspiration. Il est relié fluidiquement à l'intérieur du doigt **2,** pour aspirer l'air à l'intérieur du doigt **2.**

Le rouleau de guidage **5** a une forme de cylindre qui s'étend transversalement. Il sert à guider l'adhésif **9** relativement au doigt **2,** en arrière du doigt **2.**

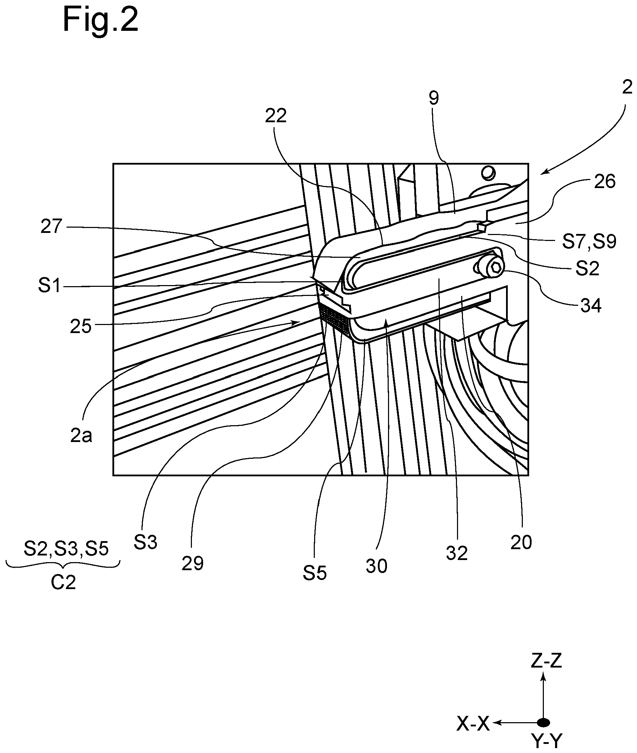

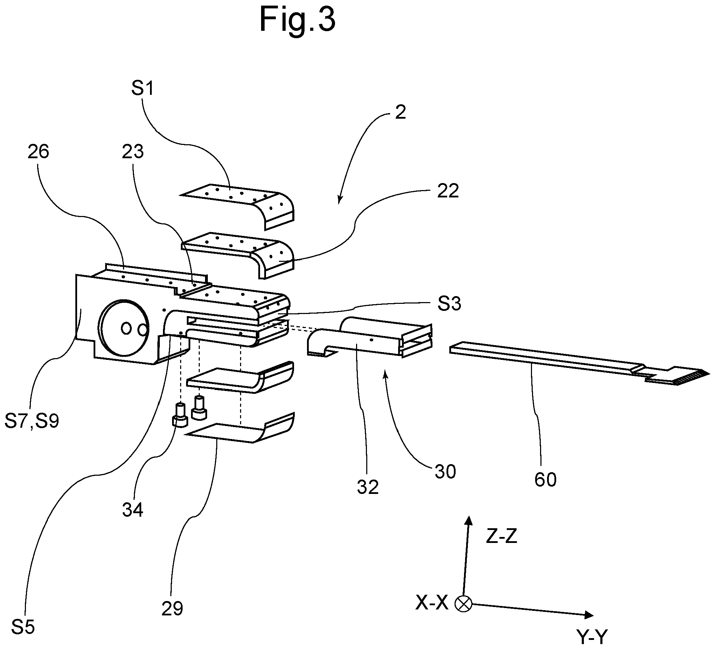

En référence conjointe aux figures 2 et 3, le doigt **2** d'application d'adhésif comprend un corps **20,** un matériau amortisseur **22,** une fente **25** de passage de la lame de l'outil de découpe, des rails de guidage **26** de l'adhésif, un organe de maintien **30** du matériau amortisseur, un élément antiadhésif **29,** des orifices d'aspiration **23** et une surface de déroulement **51** de l'adhésif. Le doigt **2** d'application d'adhésif est configuré pour appliquer un adhésif **9** sur l'ébauche de cellule **10** de batterie.

Le corps **20** est dans un premier matériau qui est différent du matériau amortisseur **22.** De manière générale, le premier matériau est plus dense et plus rigide que le matériau amortisseur **22.** Dans chacun des modes de réalisation représenté, le corps **20** est en matériau métallique, par exemple en aluminium ou un de ses alliages. Le corps **20** du doigt **2** est délimité extérieurement par une surface supérieure **S2,** une surface inférieure **S5** qui est opposée à la surface supérieure **S2** le long de la direction de la hauteur **Z-Z,** deux surfaces latérales opposées **S7, S9,** et une surface avant **S3** qui est la plus proche axialement de l'ébauche de cellule **10.** La surface supérieure **S2,** la surface inférieure **S5** et la surface avant **S3** délimitent conjointement un contour extérieur **C2** du corps du doigt dans un plan de coupe du doigt **2** qui est orthogonal à la direction transversale **Y-Y.** Le corps **20** présent des bords arrondis **27** à la jonction de la surface supérieur **S2** et de la surface avant **S3** et à la jonction de la surface avant **S3** et de la surface inférieure **S5.** Le corps **20** du doigt confère une masse et une rigidité suffisantes au doigt **2,** et il sert de support au matériau amortisseur **22.**

La surface de déroulement **51** d'adhésif délimite au moins partiellement l'extérieur du doigt **2** d'application d'adhésif. Dans chaque mode de réalisation représenté, la surface de déroulement **51** de l'adhésif recouvre la surface supérieure **S2** du corps du doigt et une partie de la surface avant **S3** du corps du doigt.

Le matériau amortisseur **22** comprend une mousse adaptée à un usage dans l'industrie automobile, par exemple en polypropylène expansé ou en polystyrène expansé. Le matériau amortisseur **22** est situé sur sensiblement tout le contour extérieur **C2** du corps du doigt. En particulier, le matériau amortisseur **22** est situé entre le corps **20** du doigt et la surface de déroulement **S1** d'adhésif. En étant également situé sur la surface inférieure **S5** du corps du doigt, le matériau amortisseur **22** permet d'amortir des contacts entre la surface inférieure du doigt **2** d'application d'adhésif et l'ébauche de cellule **10,** par exemple lors du déplacement du doigt **2** d'application d'adhésif relativement à l'ébauche de cellule **10.**

Le matériau amortisseur **22** est configuré pour amortir un contact entre le doigt **2** d'application d'adhésif et l'ébauche de cellule **10,** par exemple pour éviter que le doigt **2** détériore des électrodes de l'ébauche de cellule **10.** Le matériau amortisseur **22** est configuré pour amortir une pression qui est exercée par le doigt **2** d'application d'adhésif sur l'ébauche de cellule **10** lorsque l'adhésif **9** est pressé sur l'ébauche de cellule **10** pour faire adhérer l'adhésif **9** à l'ébauche de cellule **10.** Le matériau amortisseur **22** évite notamment de déformer plastiquement l'ébauche de cellule lorsque l'adhésif **9** est pressé sur l'ébauche de cellule **10.**

L'élément antiadhésif **29** comprend un revêtement antiadhésif. Ce revêtement antiadhésif comprend un tétra-fluoroéthylène, tel qu'un polytétrafluoroéthylène qui est également connu sous le nom commercial de « TEFLON ». L'élément antiadhésif **29** est situé entre le matériau amortisseur **22** et l'adhésif **9.** L'élément antiadhésif **29** s'étend sur tout le contour extérieur **C2** du corps **20,** en recouvrant sensiblement toute la surface extérieure du matériau amortisseur **22.** En particulier, l'élément antiadhésif **29** est situé sous toute la surface de déroulement **51** d'adhésif, ce qui limite les frottements entre l'adhésif **9** et le matériau amortisseur **22.** L'élément antiadhésif **29** est également en dehors de la surface de déroulement **51** de l'adhésif, par exemple le long de la surface inférieure **S5.** L'élément antiadhésif **29** est configuré pour limiter une adhérence de l'adhésif **9** sur le matériau amortisseur **22.**

Les orifices d'aspiration **23** sont situés sur la surface supérieure **S2** du corps de doigt et sur la surface avant **S3** du corps de doigt. Dans chaque mode de réalisation représenté, les orifices d'aspiration **23** sont situés sur toute la surface de déroulement **51** d'adhésif, en traversant notamment le corps **20** du doigt, le matériau amortisseur **22** et l'élément antiadhésif **29.** Les orifices d'aspiration **23** sont configurés pour aspirer l'adhésif **9** contre le doigt **2** d'application d'adhésif. Les orifices d'aspiration **23** permettent de maintenir l'adhésif **9** contre la surface de déroulement **51** d'adhésif, en aspirant l'adhésif **9.**

Les deux rails de guidage **26** de l'adhésif s'étendent axialement selon la direction longitudinale **X-X** du doigt, en étant strictement parallèles entre eux. Les rails de guidage **26** sont situés en amont du matériau amortisseur **22** le long de la surface de déroulement **51** de l'adhésif. Les rails de guidage **26** sont situés axialement en arrière du matériau amortisseur **22.** Les rails de guidage **26** forment une glissière de guidage de l'adhésif **9.** Les rails de guidage **26** sont configurés pour guider l'adhésif **9** relativement au corps **20** du doigt.

La fente **25** de passage de la lame de découpe s'étend axialement à travers le corps **20,** à travers le matériau amortisseur **22** et à travers l'élément antiadhésif **29.** La fente **25** de passage de la lame de découpe est par exemple située sensiblement à la moitié de la hauteur du doigt **2** selon la direction de la hauteur **Z-Z.** Elle s'étend par exemple sur sensiblement toute la largeur **Y-Y** du doigt.

L'organe de maintien **30** du matériau amortisseur comprend un ruban **32, 36** métallique et deux éléments de fixation **34, 38.** L'organe de maintien **30** du matériau amortisseur est configuré pour maintenir en position le matériau amortisseur **22** contre le corps **20** du doigt. L'organe de maintien **30** comprime notamment le matériau amortisseur **22** à distance de la surface de déroulement S1 de l'adhésif et de la surface inférieure **S5** du corps **20** du doigt.

Le ruban métallique **32, 36** comprend deux branches qui s'étendent chacune le long d'une des surfaces latérales **S7, S9** du corps. Le ruban métallique **32, 36** est traversé au niveau de la surface avant **S3** par la fente **25** de passage de la lame. Le ruban métallique **32, 36** sert à guider la lame **60,** notamment transversalement, relativement au corps **20** du doigt. Le ruban métallique **32, 36** est conçu pour maintenir le matériau amortisseur **22** contre le corps **20** du doigt en pinçant le matériau amortisseur **22** contre le corps **20.** Les éléments de fixation **34, 38** comprennent par exemple une vis et un écrou. Les éléments de fixation **34, 38** sont configurés pour fixer le ruban métallique **32, 36** relativement au corps **20** du doigt.

En référence plus spécifiquement au premier mode de réalisation qui est représenté à la figure 2, le ruban métallique **32** a une forme générale de U. Les éléments de fixation **34** sont situés latéralement relativement au corps du doigt **2,** en dépassant notamment des surfaces latérales **S7, S9** du corps du doigt.

En référence plus spécifiquement au deuxième mode de réalisation qui est représenté à la figure 3, le ruban métallique **36** a une forme générale coudée avec des branches orientées latéralement vers le bas. Les éléments de fixation **38** sont situés sous le corps **20** du doigt, en dépassant notamment en dessous de la surface inférieure **S5** du corps du doigt.

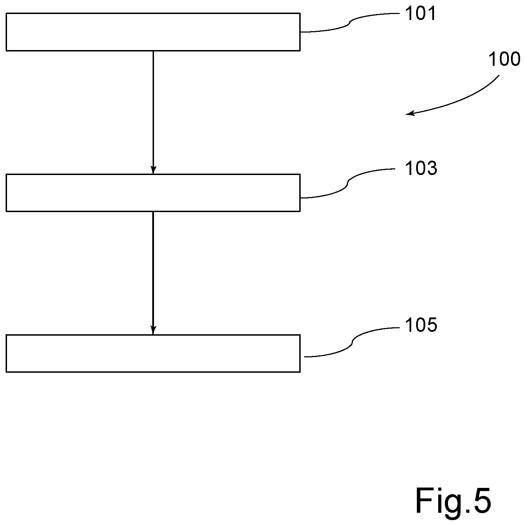

La figure 5 illustre un procédé **100** de mise en place d'un adhésif **9** par une machine **1** d'application d'adhésif. Le procédé **100** comprend une étape de mise en place **101** de l'adhésif **9** par le doigt **2** d'application d'adhésif sur l'ébauche de cellule **10.** L'étape de mise en place **101** de l'adhésif comprend le déplacement du doigt **2** d'application d'adhésif relativement à l'ébauche de cellule **10,** pour que le doigt **2** soit à la position souhaitée relativement à l'ébauche de cellule **10** pour déposer l'adhésif **9.** Le doigt **2** est par exemple déplacé axialement vers l'avant, en le rapprochant de l'ébauche de cellule **10.** L'étape de mise en place **101** de l'adhésif comprend le déroulement de l'adhésif **9** le long de la surface de déroulement **S1,** une extrémité avant de l'adhésif étant attachée à l'ébauche de cellule **10.** Lors du déroulement de l'adhésif **9,** le doigt **2** est par exemple déplacé vers l'arrière ou vers le bas relativement à l'ébauche de cellule **10.** Une fois que l'adhésif **9** a été déroulé à la longueur voulue, le procédé **100** comprend une étape de découpe**103** de l'adhésif **9** par la lame **60** de l'outil de découpe, la lame **60** étant déplacée relativement au doigt **2** à travers la fente **25** du doigt d'application de l'adhésif. Le procédé **100** comprend une étape de déplacement **105** de l'ébauche de cellule **10** de batterie relativement au doigt **2** d'application d'adhésif, pour préparer la mise en place d'un nouvel adhésif **9.** L'ébauche de cellule **10** est tournée relativement à la machine **1** d'application d'adhésif. En plus ou en variante, l'ébauche de cellule **10** est déplacée latéralement relativement au doigt **2.**

Grâce au doigt **2,** la mise en place d'un adhésif **9** sur l'ébauche de cellule **10** est améliorée, tout en limitant les détériorations de l'ébauche de cellule **10** lors de la mise en place de l'adhésif **9.** La fabrication d'une cellule de batterie est ainsi facilitée. La mise en place de l'adhésif **9** est améliorée notamment en réduisant les chutes d'adhésif. En déposant une quantité précise d'adhésif **9** à l'endroit souhaité, les arrêts intempestifs de la machine **1** d'application d'adhésif sont limités. Le doigt **2** facilite la fabrication d'une cellule de batterie, en exerçant une pression suffisante sur l'adhésif **9** et sur l'ébauche de cellule **10** pour appliquer l'adhésif **9.** En appuyant sur l'ébauche de cellule **10,** le doigt **2** permet une adhérence satisfaisante de l'adhésif **9,** notamment malgré les tolérances dans l'empilement des couches de l'ébauche de cellule **10** et malgré les tolérances de positionnement du support **14** de l'ébauche de cellule. Le matériau amortisseur **22** améliore la mise en place de l'adhésif, en limitant les détériorations de l'ébauche de cellule **10** lors de la mise en place de l'adhésif **9.** Le matériau amortisseur **22** permet par exemple d'éviter d'abîmer des électrodes de l'ébauche de cellule **10** lors d'un contact du doigt **2** avec l'ébauche de cellule **10.** Le matériau amortisseur **22** permet notamment de limiter les déformations plastiques de l'ébauche de cellule **10** lors de l'application d'un effort de pression par le doigt **2** sur l'ébauche de cellule **10.**

Le corps **20** du doigt permet au doigt d'application d'adhésif **2** d'appliquer une pression suffisante sur l'adhésif **9** et sur l'ébauche de cellule **10** pour permettre une bonne adhérence de l'adhésif **9** sur l'ébauche de cellule **10.** Les bords arrondis **27** du corps **20** permettent de limiter les détériorations de l'ébauche de cellule **10,** lorsque le doigt **2** appuie sur l'ébauche de cellule **10** et/ou lorsque le doigt **2** rentre en contact d'électrodes de l'ébauche de cellule **10.**

Les orifices d'aspiration **23** contribuent au bon déroulement de l'adhésif **9.**

En limitant une adhérence de l'adhésif sur le matériau amortisseur **22,** l'élément antiadhésif contribue au bon déroulement de l'adhésif **9.** En recouvrant tout le matériau amortisseur **22,** l'élément antiadhésif **29** limite toute adhérence du doigt **2** avec l'ébauche de cellule **10** lors du déplacement du doigt **2** relativement à l'ébauche de cellule **10.**

En améliorent le guidage de l'adhésif **9** relativement à la surface supérieure **S2** du corps du doigt **2,** les rails de guidage **26** contribuent également au bon déroulement de l'adhésif **9.**

En maintenant en position le matériau amortisseur **22** contre le corps du doigt **20,** l'organe de maintien **30** limite l'usure et les dégradations du matériau amortisseur **22.**

En étant situé à distance des principaux points de contact entre le doigt 2 et l'ébauche de cellule **10,** l'organe de maintien **30** ne gêne pas la fonction d'amortissement du matériau amortisseur **22** lors d'un contact mécanique entre le doigt **2** et l'ébauche de cellule **10.**

Bien entendu, diverses modifications peuvent être apportées aux modes de réalisation décrit ci-dessus, sans sortir du cadre de l'invention.

En variante, le corps du doigt **20** est dans un premier matériau composite qui est plus rigide et plus dense que le matériau amortisseur **22.** En plus ou en variante, le matériau amortisseur **22** est situé seulement entre la surface de déroulement **51** d'adhésif et le corps du doigt **20.** Cela permet notamment de limiter la quantité de matériau amortisseur **22** du doigt **2.**

En variante, le doigt **2** est dépourvu d'orifices d'aspiration **23.** Dans ce cas, la machine **1** d'application d'adhésif ne comporte pas d'organe d'aspiration **3.** En variante encore, des orifices d'aspiration **23** sont situés sous une partie seulement de la surface de déroulement **S1** d'adhésif, par exemple seulement à travers la surface supérieure **S2.**

En variante, le doigt **2** est dépourvu d'élément antiadhésif **29.** En variante encore, l'élément antiadhésif **26** est situé sous une partie seulement de la surface de déroulement **51** d'adhésif, par exemple seulement la surface supérieure **S2.** En plus ou en variante, l'élément antiadhésif **29** est dans un autre matériau que le TEFLON^{™}, par exemple un aérosol antiadhésif.

En variante, les rails de guidage **26** s'étendent jusqu'à l'extrémité longitudinale avant **2a** du doigt **2.** Dans ce cas, le matériau amortisseur **22** et éventuellement l'élément antiadhésif **29** recouvrent par exemple les rails de guidage **26.**

En variante, la machine **1** d'application d'adhésif comporte un support **4** du doigt **2** et un support de l'outil de découpe **6** qui sont distincts. En plus ou en variante, la machine **1** d'application d'adhésif comprend un seul élément de support de l'ébauche de cellule **10.**

En variante, l'ébauche de cellule **10** reste fixe et la machine **1** d'application d'adhésif est la seule à se déplacer pour mettre en place l'adhésif **9.** En variante encore, la machine **1** d'application d'adhésif reste fixe et l'ébauche de cellule **10** est la seule à se déplacer pour mettre en place l'adhésif **9.**

En variante, le doigt **2** est par exemple déplacé vers l'arrière ou vers le haut relativement à l'ébauche de cellule **10** lors du déroulement de l'adhésif **9.**

## Revendications

1. Doigt (2) d'application d'adhésif, configuré pour appliquer un adhésif (9) sur une ébauche de cellule (10) de batterie, le doigt (2) d'application d'adhésif comprenant un corps (20) dans un premier matériau, le doigt (2) d'application d'adhésif comprenant un matériau amortisseur (22) qui est différent du premier matériau, le matériau amortisseur (22) étant configuré pour amortir un contact entre le doigt (2) d'application d'adhésif et l'ébauche de cellule (10) de batterie, le matériau amortisseur (22) étant configuré pour amortir une pression qui est exercée par le doigt (2) d'application d'adhésif sur l'ébauche de cellule (10) lorsque l'adhésif (9) est pressé sur l'ébauche de cellule (10) de batterie pour faire adhérer l'adhésif (9) à l'ébauche de cellule (10) de batterie.

2. Doigt (2) d'application d'adhésif selon la revendication précédente, dans lequel le corps (20) du doigt est en matériau métallique, le doigt (2) d'application d'adhésif comprenant une surface de déroulement (S1) d'adhésif délimitant au moins partiellement l'extérieur du doigt (2) d'application d'adhésif, le matériau amortisseur (22) étant au moins partiellement situé entre le corps (20) du doigt et la surface de déroulement (S1) d'adhésif.

3. Doigt (2) d'application d'adhésif selon l'une quelconque des revendications précédentes, dans lequel le matériau amortisseur (22) est situé sur sensiblement tout un contour extérieur (C2) d'une première extrémité longitudinale du corps du doigt d'application d'adhésif, le contour extérieur (C2) comprenant de préférence une surface inférieure (S5), une surface supérieure (S2) et une surface avant (S3) du corps (20) du doigt d'application d'adhésif.

4. Doigt (2) d'application d'adhésif selon l'une quelconque des revendications précédentes, dans lequel le doigt (2) d'application d'adhésif comprend des orifices d'aspiration (23) configurés pour aspirer l'adhésif (9) contre le doigt (2) d'application d'adhésif, les orifices d'aspiration (23) étant de préférence situés sur une surface supérieure (S2) du corps de doigt et sur une surface avant (S3) du corps de doigt.

5. Doigt (2) d'application d'adhésif selon l'une quelconque des revendications précédentes, dans lequel le doigt (2) d'application d'adhésif comprend un élément antiadhésif (29) qui est situé entre le matériau amortisseur (22) et l'adhésif (9) lorsque le doigt (2) d'application d'adhésif est au moins partiellement recouvert d'adhésif (9), l'élément antiadhésif (29) étant configuré pour limiter une adhérence de l'adhésif (9) sur le matériau amortisseur (22).

6. Doigt (2) d'application d'adhésif selon la revendication précédente, dans lequel l'élément antiadhésif (29) comprend un revêtement antiadhésif comprenant un tétra-fluoroéthylène, de préférence un polytétrafluoroéthylène.

7. Doigt (2) d'application d'adhésif selon l'une quelconque des revendications précédentes, dans lequel le doigt (2) d'application d'adhésif comprend au moins un rail de guidage (26) de l'adhésif, le rail de guidage (26) étant de préférence situé axialement en arrière du matériau amortisseur (22).

8. Doigt (2) d'application d'adhésif selon l'une quelconque des revendications précédentes, dans lequel le doigt (2) d'application d'adhésif comprend une fente (25) de passage d'une lame de découpe de l'adhésif.

9. Doigt (2) d'application d'adhésif selon l'une quelconque des revendications précédentes, dans lequel le doigt (2) d'application d'adhésif comprend un organe de maintien (30) du matériau amortisseur qui est configuré pour maintenir en position le matériau amortisseur (22) contre le corps (20) du doigt, l'organe de maintien (30) du matériau amortisseur étant de préférence configuré pour pincer le matériau amortisseur (22) contre le corps (20) du doigt.

10. Doigt (2) d'application d'adhésif selon la revendication 8 et selon la revendication 9, dans lequel l'organe de maintien (30) du matériau amortisseur comprend un ruban (32) métallique qui est traversé par la fente (25) de passage de la lame de découpe de l'adhésif, le ruban (32) métallique étant configuré pour guider la lame de découpe à la sortie de la fente (25) de passage de la lame de découpe de l'adhésif.

11. Machine (1) d'application d'adhésif sur une ébauche de cellule (10) de batterie, dans laquelle la machine (1) d'application d'adhésif comprend un doigt (2) d'application d'adhésif selon l'une quelconque des revendications, un support (4) du doigt d'application d'adhésif, et un support (14) de l'ébauche de cellule de batterie.

12. Machine (1) d'application d'adhésif selon la revendication précédente, dans laquelle la machine (1) d'application d'adhésif comprend un organe d'aspiration (3) de l'adhésif, un outil de découpe (6) de l'adhésif comprenant une lame (60) de découpe de l'adhésif, et/ou un rouleau de guidage (5) de l'adhésif.

13. Machine (1) d'application d'adhésif selon la revendication 11 ou selon la revendication 12, dans laquelle le support (4) du doigt d'application d'adhésif est également le support de l'outil de découpe.

14. Procédé (100) de mise en place d'un adhésif (9) par une machine (1) d'application d'adhésif selon l'une quelconque des revendications 11 à 13, dans lequel le procédé comprend :
- une étape de mise en place (101) de l'adhésif (9) par le doigt (2) d'application d'adhésif sur l'ébauche de cellule (10) de batterie, l'adhésif (9) étant notamment un ruban adhésif,
- une étape de découpe(103) de l'adhésif (9) par la lame de l'outil de découpe, la lame étant déplacée à travers la fente (25) du doigt d'application de l'adhésif, et
- une étape de déplacement (105) de l'ébauche de cellule (10) de batterie relativement au doigt (2) d'application d'adhésif.

15. Procédé (100) de mise en place de l'adhésif (9) selon la revendication précédente, dans lequel l'étape de mise en place (101) de l'adhésif comprend :
- le déplacement du doigt (2) d'application d'adhésif relativement à l'ébauche de cellule (10) de batterie, et
- le déroulement de l'adhésif (9) le long de la surface de déroulement (S1), une extrémité de l'adhésif étant attachée à l'ébauche de cellule (10) de batterie.
